# FASCICULE DE BREVET EUROPEEN

(11) **EP 1 310 199 B1**
(45) Date de publication et mention de la délivrance du brevet: **24.01.2007**
(21) Numéro de dépôt: 01126726.7
(22) Date de dépôt: 09.11.2001
(51) Int. Cl.: A47J 31/40

(54) **Dispositif et méthode pour la sélection et l'extraction d'une capsule pour la préparation d'une boisson**
Vorrichtung und Verfahren zum Selektieren und Extrahieren einer Kartusche für die Zubereitung eines Getränkes
Device and method for selecting and extracting a cartridge for preparing a beverage

(43) Date de publication de la demande: 14.05.2003
(73) Titulaire: SOCIETE DES PRODUITS NESTLE S.A., 1800 Vevey (CH)
(72) Inventeur: Zurcher, Alain, 1142 Pampigny VD (CH); Pillot, Pierre, 1526 Forel-sur-Lucens VD (CH)
(74) Mandataire: Borne, Patrice Daniel

(56) Documents cités:
- EP-A- 1 002 490
- EP-A- 1 089 240

## Description

La présente invention concerne un dispositif pour la préparation d'une boisson à partir de capsules contenant une substance à extraire dans un système d'extraction du dispositif. La présente invention attrait plus particulièrement à la sélection et la prise en charge d'une capsule dans un tel dispositif.

Il est connu de préparer des boissons telles que du café à partir de capsules contenant une dose prédéterminée de café torréfié moulu. Les capsules présentent l'avantage de faciliter les opérations de préparation de la boisson, d'assurer une préparation propre sans déchet en marc visible, et de parfaitement contrôler le dosage et la qualité du produit préparé et ce de manière reproductible.

D'une manière générale, le principe d'extraction d'une capsule consiste à (i) enfermer la capsule dans une enceinte résistante à la pression, (ii) percer l'une des faces de la capsule généralement au moyen de pointe(s) ou lame(s) située(s) dans une partie comprenant une arrivée d'eau appelée communément "douche", (iii) introduire une quantité d'eau chaude dans la capsule de façon à créer un environnement sous pression de plusieurs bars à l'intérieur de l'élément pour produire l'extrait liquide de café puis, (iv) libérer l'extrait liquide de café au travers de la face opposée de la capsule qui, au contact de parties saillantes, s'ouvre sous l'effet de la pression interne créée dans la capsule. L'avantage de ce principe d'extraction à partir de capsules provient de ce que les conditions d'extraction (en particulier, températures, pressions, temps) peuvent être contrôlées en raison du fait que les capsules sont parfaitement calibrées, tant dans leur contenu que dans leur emballage.

Dans la plupart des dispositifs d'extraction du commerce, le chargement des capsules se fait de façon manuelle et individuelle dans le porte-capsule d'extraction ; qui en général, correspond à la partie de base d'où s'écoule ensuite l'extrait liquide. Le porte-capsule peut se présenter sous différentes formes ; généralement sous la forme d'une cuillère à engagement par baïonnette du type de celles des machines expresso traditionnelles ou encore sous forme de mâchoires mobiles se refermant sous l'action d'un mécanisme à genouillère. Il existe aussi des systèmes de chargement en capsules du type à tiroir mobile susceptibles d'amener la capsule dans un mouvement de chargement simplifié, linéaire horizontal ou autre, dans le système d'extraction. Un tel système est décrit dans la demande co-pendante européenne numéro 00110102.1 appartenant au déposant. Cependant ces système ne prennent en charge qu'un nombre limité de capsules mises en place dans le système par l'utilisateur lui-même.

Il existe cependant un besoin pour assurer une alimentation en capsules à partir d'une réserve de capsules ne nécessitant pas la manipulation directe avec la capsule mais au contraire, favorisant la disposition de manière plus automatisée des capsules dans le système d'extraction. Il existe aussi un besoin de mettre à disposition des réserves de capsules de nature identique ou au contraire, différentes, tout en offrant une grande facilité de chargement. Certains systèmes ont déjà été décrits dans des publications de brevets. Par exemple, la demande de brevet suisse No. 471 570 se rapporte aux machines automatiques à café comprenant un mécanisme de chauffage et de dosage d'eau, un mécanisme d'emmagasinage de cartouches de charge contenant de la poudre à café coopérant avec un disque recevant et transportant les cartouches pour les placer devant une bouche de décharge d'eau chaude et pour faire sortir les cartouches après infusion ; tous ces mécanismes étant actionnés par des moteurs en configuration synchronisée. Les cartouches sont transportées individuellement à partir de trémies sur un disque ajouré jusqu'à une sortie d'eau sous pression. Un tel dispositif est rudimentaire et n'est pas conçu pour alimenter un système d'extraction moderne dont l'enceinte se referme entièrement sur la capsule pour réaliser l'extraction dans des conditions de pression, de temps et de températures parfaitement contrôlées et reproductibles. D'autre part, l'éjection de la cartouche en dehors du disque nécessite de déloger la cartouche en dehors du disque par soulèvement de la cartouche, ce qui peut poser des problèmes de coincement et de récupération.

La demande de brevet européenne No. 1046366 se rapporte à un dispositif pour l'alimentation de portions de café moulu dans une unité d'extraction ayant un magasin permettant d'accommoder une pluralité de portions de café et des moyens de déchargement des portions individuelles dans le dispositif d'alimentation. Le système de déchargement des capsules est relativement complexe et met en oeuvre plusieurs paires de gâchettes actionnables par des paires d'éléments d'actionnement eux-mêmes commandés par un électro-aimant. Chaque série ou tube de portions de café possède ses propres éléments de déchargement rendant le système relativement compliqué, peu rationnel et coûteux. D'autre part, le système demande une grande précision et une synchronisation parfaite du mouvement des éléments de déchargement qui doivent agir en même temps pour éviter tout coincement des portions de café dans le système. Au fur et à mesure des répétitions et de l'usure des pièces, un tel système peut s'avérer peu fiable et sujet à des défaillances plus ou moins sérieuses. Un autre inconvénient provient de ce que la chambre d'extraction recevant la portion doit pivoter sur le côté pour s'aligner dans la direction du support d'extraction puis s'élever pour rejoindre ledit support dans un mouvement linéaire. La combinaison répétée de mouvements complexes selon plusieurs axes est susceptible d'affecter la précision du système d'extraction, de modifier les conditions d'extraction au cours du temps, de favoriser l'usure prématurée des pièces mécaniques et ainsi de diminuer la fiabilité ainsi que la durée de vie du dispositif. Un autre inconvénient provient de ce que l'extraction se fait de bas-en-haut, avec sortie du liquide extrait par le dessus du support d'extraction ; ce qui fait que l'on doit prévoir un tube d'amenée vers l'endroit de remplissage de la tasse. Une telle configuration pose des problèmes de vidange du liquide.

La demande de brevet EP 1 089 240 A2 se rapporte à une machine de boisson automatique possédant un mécanisme de transfert pour déplacer une cartouche d'une portion de stockage à une portion d'extraction de la boisson. Un tel dispositif est cependant complexe car il met en oeuvre un déplacement contrôlé selon plusieurs axes en translation X. Y, Z. De plus, la cartouche n'est pas libérée mais maintenue en place lors de l'extraction.

La demande de brevet EP 1 002 490 A1 se rapporte à une machine de distribution de boisson pour infusion de cartouches lesquelles sont déplacées à partir d'un empilement de cartouches par un moyen d'expulsion fonctionnant sous forme d'un curseur. Un tel dispositif est conçu pour un placement sur une surface de réception plane. Les forces de frottement engendrées peuvent aussi nuire à la précision du placement.

L'un des buts de l'invention est de proposer une dispositif de préparation de boissons qui vise à surmonter les inconvénients des dispositifs connus de l'art antérieur.

L'un des buts de l'invention est donc de proposer un dispositif de préparation de boissons intégrant une fonction de sélection en capsules qui soit associé à un système d'extraction des capsules pour permettre l'extraction dans des conditions optimales.

Un autre but est d'améliorer la prise en charge de la capsule après sa sélection, en particulier, son transfert et son extraction et, éventuellement, son éjection de manière fiable, rapide et automatisée.

Un autre but est de viser une utilisation plus fiable et sans problème d'écoulement et de vidange du liquide extrait.

Ces buts sont atteints avec un dispositif de préparation de boissons à partir de capsules contenant une substance à extraire dans un système d'extraction pour la préparation de boissons qui comprend un système d'emmagasinage comprenant des capsules ordonnées selon plusieurs séries, un moyen de capture pour capturer individuellement une capsule dans une série et pour libérer la capsule dans un système d'extraction; caractérisé en ce que le moyen de capture est mobile entre le système d'emmagasinage et le système d'extraction et est agencé de manière à prendre au moins deux positions dont une première position de réception dans laquelle la capsule est retenue par le moyen de capture et est apte à être transférée par le moyen de capture et une seconde position de libération dans laquelle le moyen de capture est actionnable en ouverture pour libérer la capsule du moyen de capture.

De préférence, le moyen de capture est actionné en ouverture pour libérer la capsule dans le système d'extraction lequel est agencé pour se refermer sur la capsule. Après libération, la capsule est prise en charge par le système d'extraction sans interaction mécanique significative avec le moyen de capture. De cette indépendance, il en résulte un système d'extraction autonome donc susceptible d'assurer des conditions d'extraction de manière contrôlée et reproductible.

Dans un mode préféré, le moyen de capture libère la capsule dans le système d'extraction de manière coordonnée en réponse à la fermeture du système d'extraction autour de la capsule. Ainsi, le temps de chargement de la capsule et de fermeture du système d'extraction est réduit de manière significative.

De plus, des moyens d'actionnement en ouverture du moyen de capture sont avantageusement prévus qui sollicitent le moyen de capture une première fois en ouverture pour libérer la capsule dans le système d'extraction, puis, une deuxième fois en ouverture pour libérer la capsule dans une zone d'éjection après que le moyen de capture ait récupéré la capsule usagée dans le système d'extraction. Ainsi, le même moyen est avantageusement utilisé pour effectuer à la fois le changement et l'éjection de la capsule en dehors du système.

Dans une disposition préférée, le moyen de capture comprend une paire de mâchoires, mobiles entre une position refermée suffisante pour retenir la capsule et une position écartée libérant la capsule. La paire de mâchoires est, de préférence, actionnable élastiquement en ouverture par écartement au moyen d'un pointeau lequel active lesdites mâchoires par déplacement relatif du pointeau par rapport à une zone d'écartement des mâchoires. De manière préférentielle, les mâchoires proposent des surfaces d'appui sur lesquelles la capsule peut reposer, en partie au moins, pour permettre son transfert sans dommage. Dans un mode préféré, la paire de mâchoires est montée de manière mobile en rotation de manière à pouvoir se déplacer entre le système d'emmagasinage et le système d'extraction.

Afin de réaliser une parfaite coordination entre le moyen de capture et le système d'extraction, la paire de mâchoire est déplaçable relativement au pointeau pour libérer la capsule par poussée réalisée au moins par un organe de poussée se déplaçant de concert avec une partie mobile du système d'extraction lors de la fermeture du moyen d'extraction autour de la capsule.

Dans une configuration préférée, la capsule usagée est éliminée après extraction par le même moyen de capture utilisé pour la mise en place de la capsule dans le système d'extraction. Pour cela, les mâchoires sont actionnables en ouverture dans une zone d'éjection après réalisation de l'extraction de la capsule et déplacement du moyen de capture dans une zone intermédiaire entre la zone d'extraction et la zone de chargement. L'ouverture des mâchoires en écartement dans la zone d'éjection pour libérer la capsule usagée est réalisée préférentiellement par un moyen à came qui déplace le pointeau. Un tel moyen du type à came est actionnable de manière cyclique en fonction du déplacement du moyen de capture et de sa position, ce qui simplifie le contrôle de l'ouverture et de la fermeture des mâchoires.

L'invention se rapporte aussi à une méthode de sélection et chargement d'une capsule pour la préparation d'une boisson dans un système d'extraction à partir d'une zone d'emmagasinage comprenant plusieurs séries de capsules qui comprend la sélection et la capture d'une capsule parmi l'une des séries de capsules, le transfert de cette capsule dans un système d'extraction, l'extraction de cette capsule dans le système d'extraction caractérisée en ce que la capsule est capturée puis libérée dans le système d'extraction lequel est apte à se refermer autour de la capsule.

Dans un mode préféré, la capsule est libérée dans le système d'extraction par un moyen de capture dans un mouvement de dégagement n'engendrant pas d'interaction mécanique entre le système d'extraction et le moyen de capture. La capsule est, de préférence, libérée par le moyen de capture par dépose de la capsule sur une partie de réception du système d'extraction résultant d'un mouvement de rapprochement vertical et de dégagement latéral du moyen de capture. Ainsi, on obtient un positionnement précis de la capsule dans le système d'extraction permettant une fermeture autour de la capsule par un système d'extraction autonome.

Dans un mode préférentiel, la capsule usagée est récupérée puis transférée dans une zone d'éjection pour être libérée à nouveau. De plus, la capsule dans le système d'extraction est coordonnée à la fermeture du système et, réciproquement, la récupération de la capsule usagée dans le système d'extraction est coordonnée à la réouverture du système d'extraction.

Ces caractéristiques et leurs avantages ainsi que d'autres possibles pourront être mieux compris à la lumière de la description qui suit et des dessins en annexe:
Fig. 1 est une vue générale en perspective d'un dispositif d'extraction avec système de chargement automatique en capsules selon l'invention dans une configuration habillée;
Fig. 2 est une vue générale en perspective d'un premier côté du même dispositif mais représentant les éléments mécaniques du dispositif sans l'habillage externe et sans la partie de contrôle du dispositif;
Fig. 3 est une vue générale similaire à celle de la Fig. 2 mais d'un second côté du dispositif;
Fig. 4 est une vue de dessus du dispositif;
Fig. 5 est une vue en coupe selon A-A de la Fig. 4;
Fig. 6 montre schématiquement l'agencement entre le système de capture et le système d'emmagasinage du dispositif;
Fig. 7 est une vue en perspective du système de capture et de commande;
Fig. 8 est une vue de détail de la Fig. 7 sans carter;
Fig. 9 est une vue de face de la Fig. 7;
Fig. 10 est une vue en perspective partielle du dispositif dans une configuration fermée d'extraction;
Fig. 11 est une vue en coupe schématique selon B-B de la Fig. 10 dans une configuration ouverte du système d'extraction;
Fig. 12 est une vue en coupe schématique selon B-B de la Fig. 10 dans une configuration fermée du système d'extraction;
Fig. 13 est une vue en perspective du dispositif dans une configuration d'éjection de la capsule;
Fig. 14 est une vue en perspective de détail partielle du système de capture;
Fig. 15 est une vue similaire à la Fig. 14 mais selon un angle de perspective différent.

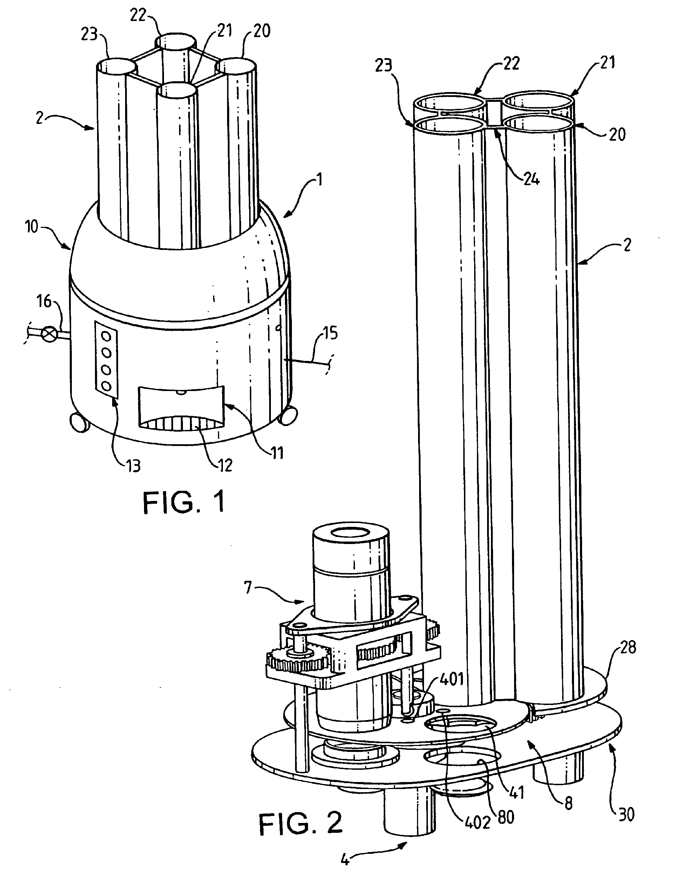

Le dispositif d'extraction selon l'invention représenté à la Fig. 1 est une machine de distribution de café et/ou autres boissons pour la préparation de boissons par extraction d'une substance alimentaire contenue dans des capsules prédosées. Le dispositif comprend une armoire 10 de forme à la fois esthétique et fonctionnelle qui renferme les éléments essentiels du système d'extraction, de sélection et de commande du dispositif. A l'arrière de l'armoire se trouve un système d'emmagasinage 2 muni d'une pluralité de tubes 20, 21, 22, et 23 contenant des séries de capsules à extraire. A l'avant de l'armoire est aménagée une zone de service 11 comprenant un support stable 12 destiné à recevoir un ou plusieurs récipients pour recueillir la boisson. Un tableau de commande 13 est prévu à l'avant de l'armoire lequel est muni de touches permettant la sélection d'une boisson correspondant aux différents choix en capsules disponibles dans le dispositif d'emmagasinage. Certaines touches peuvent aussi correspondre à certains mélanges possibles obtenus au moyen de plus d'une capsule sélectionnée. Le dispositif est alimenté en électricité par une alimentation électrique 15 et en eau par un conduit d'eau 16.

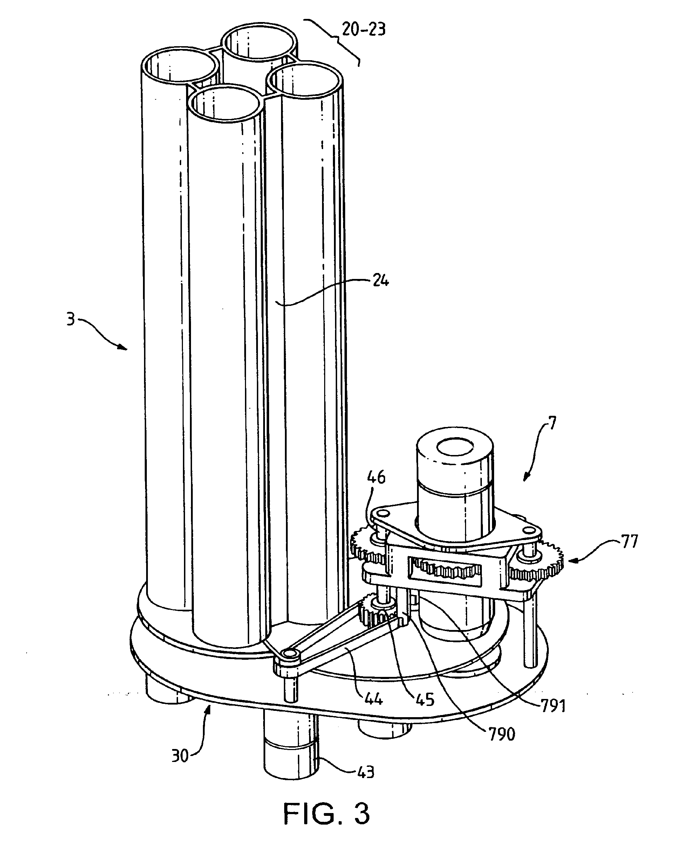

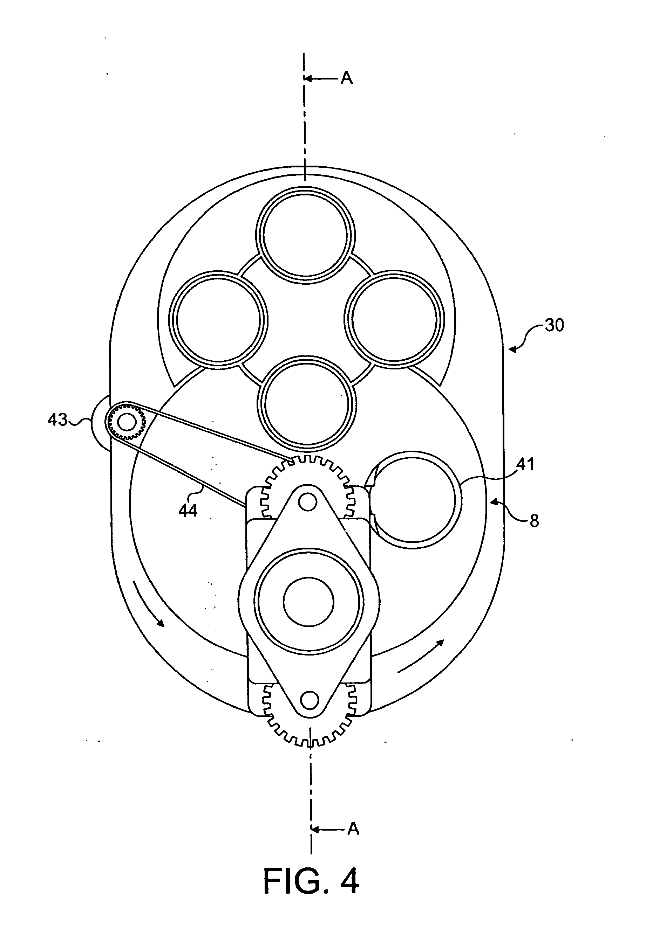

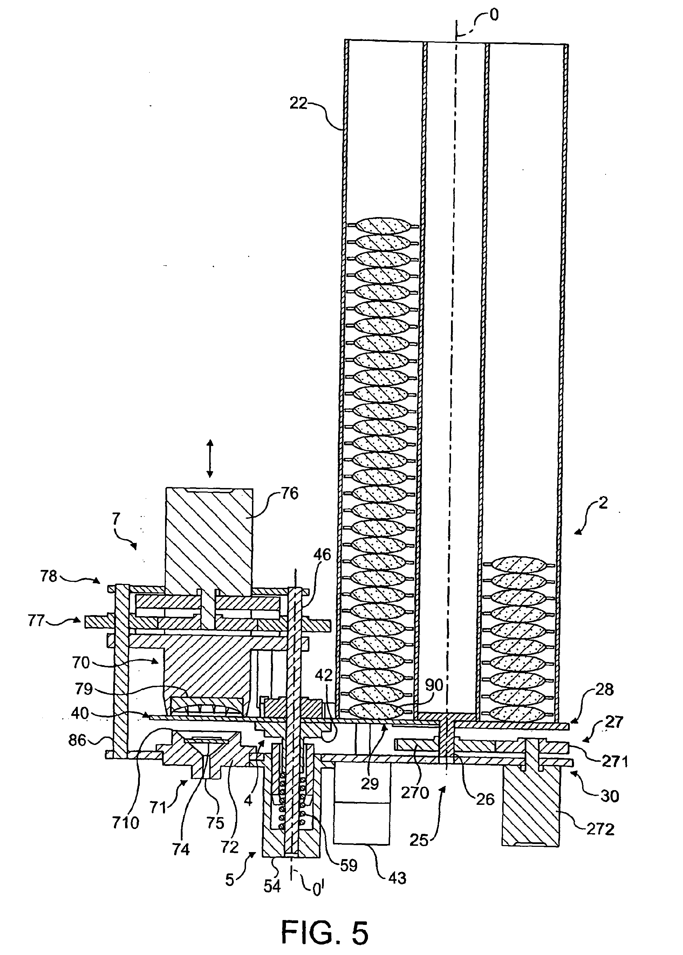

En référence aux Fig. 2 à 5, le dispositif selon l'invention comprend une embase principale 30 sur laquelle est montée un système d'emmagasinage 2 sous forme d'un carrousel comprenant plusieurs tubes de recharge 20-23 s'étendant verticalement et arrangés ensemble dans une disposition orbitale fermée. Chaque tube forme un espace interne verticalement orienté adapté au logement d'une série de capsules empilées les unes sur les autres de manière libre dans le tube de recharge. Les tubes de recharge peuvent être solidaires les uns des autres de manière à constituer un ensemble relativement rigide lorsque le carrousel est entraîné en rotation. Pour cela, chaque tube est longitudinalement relié de part et d'autre aux tubes voisins par des entretoises de liaison 24. Comme le montre la Fig. 5, les tubes de recharge sont reliés entre eux à leur base inférieure par un moyen central de connexion 25 qui s'étend vers le bas selon une tige d'axe central 26 en liaison en rotation avec l'embase 30. Des moyens d'entraînement 27 sont prévus pour entraîné l'axe central 26 en rotation. Ces moyens peuvent comprendre, comme représenté à la Fig. 5, des roues d'engrenage 270, 271 et un moteur électrique 272 lequel est connecté à l'embase 30. Selon une possible variante, les moyens d'entraînement peuvent comprendre une came du type "croix de Malte" dont la fonction est d'assurer une rotation précise par quart de tour des tubes de recharge.

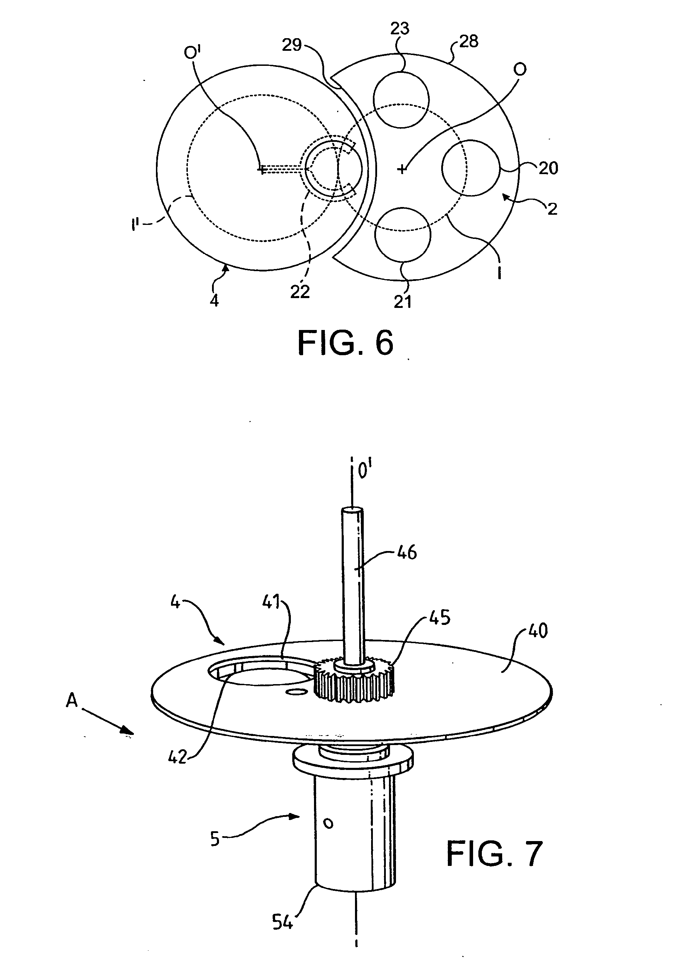

Pour assurer une stabilité de l'ensemble ainsi qu'une retenue des capsules dans les tubes en position de stockage, un moyen de support de tube 28 est prévu sur lequel prend appui le moyen central de connexion 25. Le moyen de support de tube 28 est une plaque-support fixe et solidaire de l'embase principale 30 par des moyens d'entretoisement (non représentés). La plaque-support 28 est traversée, de manière glissante, par l'axe central du carrousel 26 de façon à permettre au carrousel; c'est à dire à l'ensemble formé par les tubes de recharge 20-23 et leurs moyens de connexion 25, 26 d'être mobile en rotation selon un axe vertical central O par rapport à la plaque-support 28 qui elle est fixe par rapport à l'embase 30. Les tubes de recharge 20-23 sont donc apte à être déplaçés selon un chemin circulaire I, en orbite autour de l'axe O comme le représente schématiquement la Fig. 6. Les tubes sont ainsi mobiles entre une configuration de support des capsules par la plaque-support 28 vers une configuration de présélection correspondant à un passage 29 pratiqué dans la plaque-support 28; lequel passage 29 s'inscrit en intersection par rapport à un arc déterminé du chemin orbital I. Le passage 29 fournit ainsi une ouverture inférieure dans la plaque-support 28 pour un tube de recharge de la série; en l'occurrence le tube 22 dans l'exemple de la Fig. 6.

Les Figs. 5 à 8 illustrent le moyen de capture 4 servant à capturer une capsule présélectionnée dans le système d'emmagasinage 2. Par capsule présélectionnée, on entend une capsule 90 se trouvant la plus basse dans le tube en regard du passage 29. Le moyen de capture 4 comprend une plaque d'obturation 40 munie d'une ouverture 41 suffisante pour le passage libre d'une capsule située en regard de celle-ci. En dessous de cette plaque 40 se trouve un élément articulé pouvant prendre au moins deux positions dont une position de retenue permettant de retenir la capsule et une position de libération permettant de libérer la capsule. Un tel élément est de préférence une paire de mâchoires 42 qui se déplace de manière solidaire avec la plaque d'obturation selon un axe central de rotation O' parallèle et décalé par rapport à l'axe O du carrousel. Pour cela, les mâchoires 42 et la plaque 40 sont montées sur une tige centrale 46. La plaque d'obturation et les mâchoires sont entraînées en rotation au moyen d'un ensemble d'entraînement comprenant un moteur 43 qui entraîne au moyen d'une courroie 44 un pignon central 45 lui-même solidaire de la tige 46, comme le montre la Fig. 3.

On comprend que le moyen de capture 4, volontairement simplifié à la Fig. 6, est mobile selon un second chemin circulaire I' qui coupe le premier chemin circulaire I du système d'emmagasinage 2. Plus exactement, les éléments essentiels de capture qui sont l'ouverture 41 et les mâchoires 42 sont mobiles de concert selon le chemin I' de façon à se trouver au moment de la capture en regard du passage 29 de la plaque-support de tubes 28. Pour cela, la plaque d'obturation 40 est disposée en recouvrement du passage 29 de sorte qu'elle sert ainsi à retenir l'empilement des capsules du tube en position dans le passage 29 jusqu'au moment où son ouverture discrète 41 est amenée en position alignée par rapport au tube présélectionné, c'est-à-dire dans l'intersection des chemins orbitaux I-I'.

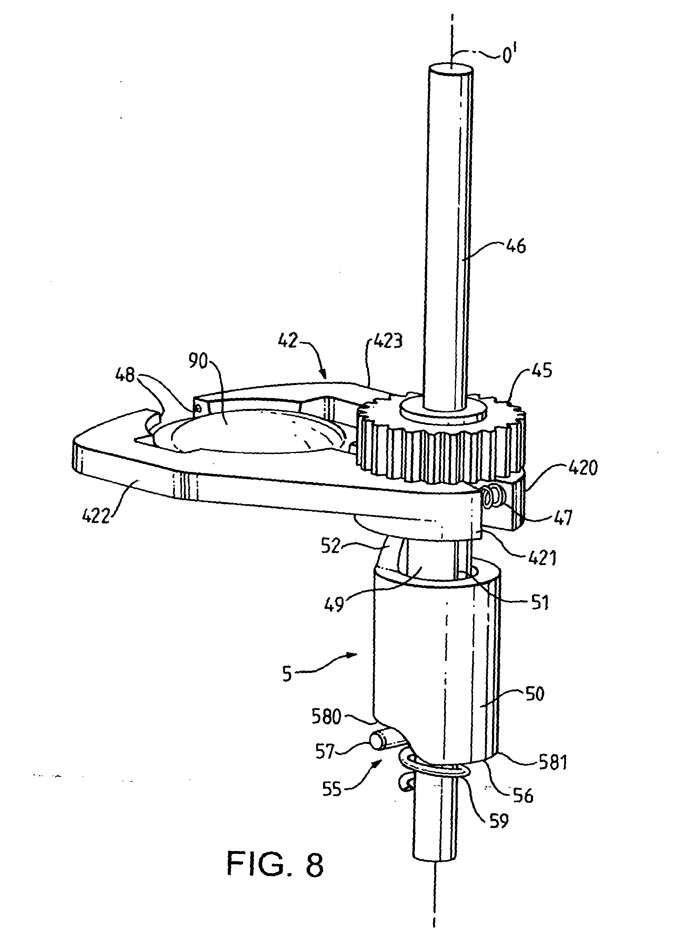

Le système de capture 4 va maintenant être décrit plus en détails. Comme le montre la Fig. 8, les mâchoires 42 de ce système sont maintenues en position refermée sous l'action d'un ressort 47. Le ressort agit par effet de compression sur les parties opposées 420, 421 des membres de préhension 422, 423 des mâchoires de façon à rapprocher ceux-ci et offrir ainsi une zone de rebord d'appui 48 pour la capsule 90. Sous les mâchoires 42 sont disposés des moyens de commande 5 des mâchoires en ouverture et fermeture. Les moyens de commande sont logés en coulissement dans un carter 54 solidaire de l'embase 30 (visible sur les Figs. 5 et 7). La tige 46 est elle-même montée en rotation dans la base du carter d'une part et se prolonge vers le haut pour participer à l'entraînement du dispositif d'extraction comme il sera expliqué plus loin. Les mâchoires 42 sont maintenues en appui contre la surface inférieure de la plaque d'obturation 40 au moyen d'un ressort de compression 59 logé dans le carter Sous l'effet de compression du ressort et en l'absence d'un effort inverse de poussée sur les mâchoires, les mâchoires 42 restent sensiblement au contact de la plaque d'obturation 40. Comme il sera expliqué plus loin, un effort de poussé sur les mâchoires 42 est en effet prévu pour commander l'ouverture des mâchoires dans des conditions particulières.

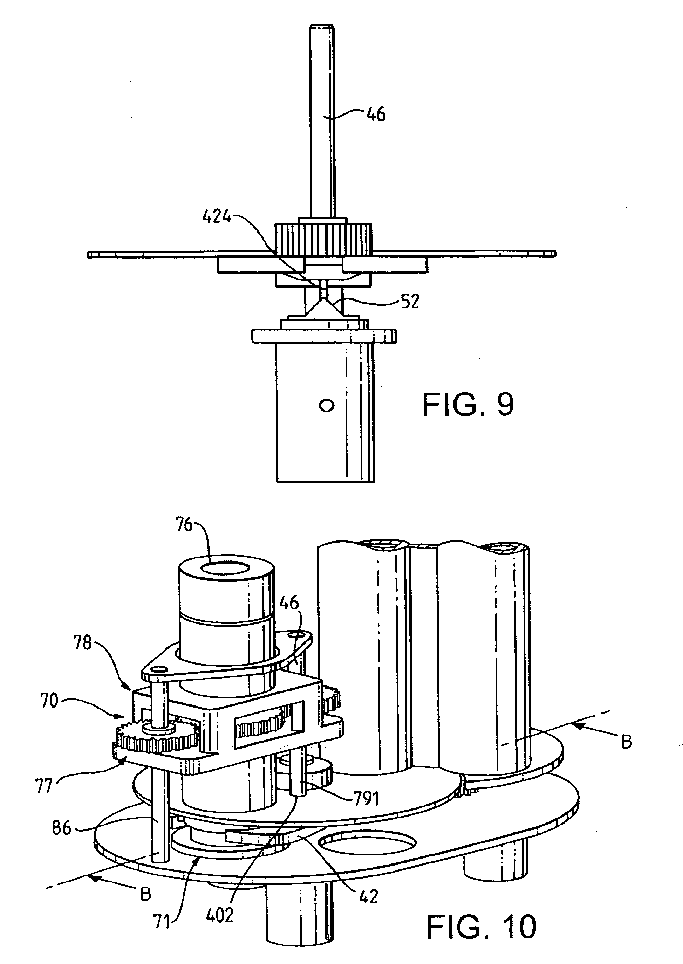

Les moyens de commande 5 permettant de commander le système de capture en capsule, comprend un élément tubulaire ou cylindre 50 guidé en translation le long d'une base cylindrique 49 des mâchoires au moyen d'un guidage du type à nervure/rainure 51. Le cylindre 50 est donc mobile en translation de bas en haut et réciproquement le long de la base inférieure 49 des mâchoires mais est interdit en rotation par rapport à celle-ci. L'extrémité supérieure du cylindre se termine par un pointeau 52 qui est aligné entre les mâchoires 42 comme le montre la Fig. 9. Le pointeau 52 agit sur une zone d'écartement 424 des mâchoires à la base de celles-ci. A l'extrémité opposée du cylindre, le cylindre coopère avec le carter au moyen d'un mécanisme du type à came 55 qui permet au cylindre 50 de se déplacer de bas en haut et réciproquement de manière cyclique lors de chaque révolution des moyens de capture 4 autour de la tige 46 d'axe O'. Le mécanisme 55 comprend une surface de came 56 s'inscrivant dans la section tubulaire du cylindre qui coopère avec un doigt radial fixe 57 dans le carter 54 et solidaire de celui-ci. La surface de came 56 possède une partie dégagée 580 comme le montre la Fig. 8 dans laquelle le doigt 57 n'applique aucun effort d'appui et une partie en relief 581 opposée à la partie dégagée 580 dans laquelle le doigt applique un effort d'appui. Lorsque le cylindre est orienté de manière à ce que la partie dégagée 580 soit en correspondance avec le doigt 57, le cylindre reste en position basse et son pointeau 52 n'applique aucun effort d'écartement sur les mâchoires de sorte que celles-ci restent refermées. Cette position correspond à la position de capture d'une capsule de la Fig. 7 et 8 ainsi qu'à la position de transfert. Au contraire, lorsque le cylindre est orienté de manière à ce que la partie en relief soit au contact du doigt 57, le cylindre est poussé vers le haut par effet d'appui du doigt sur la partie en relief de sorte que le pointeau provoque un effort d'écartement sur les mâchoires. Cette position correspond à la situation d'éjection d'une capsule après son extraction comme il sera expliqué plus loin en détails.

Comme le montre les Figs. 3 à 5, le dispositif est muni d'un système d'extraction 7 qui se situe à l'extrémité opposée du système d'emmagasinage 2 par rapport à la tige de rotation 46 d'axe O' des moyens de capture. Le système d'extraction est muni d'un ensemble d'extraction composé d'une tête d'extraction ou bloc mobile 70. Le bloc 70 est formé d'une cavité ouverte 79, appelée communément "douche", comprenant des pointes permettant le perçage de la capsule ainsi qu'une arrivée en eau chaude (non représentée). Le système d'extraction 7 possède aussi une embase d'extraction fixe 71 comprenant un organe de libération de l'extrait 72. Cet organe 72, comme connu en soi, est monté directement sur l'embase 30. Il possède une plaque de répartition de pression 74 nécessaire pour ouvrir la capsule et un conduit 75 d'écoulement de l'extrait liquide. Le bloc 70 est montée en translation, d'une part, le long de la tige 46 et d'autre part le long d'une tige additionnelle 86. Un moteur central 76 monté sur un bâti 78 relié aux tiges 46, 86, entraîne le bloc 70 en ouverture-fermeture par rapport à l'organe d'extraction 72 fixe par l'intermédiaire d'un ensemble d'engrenages 77 destiné à répartir les efforts d'entraînement du moteur sur les deux côtés des tiges 46, 86.

Enfin, le dispositif d'extraction 7 comprend des organes de poussée 790, 791 reliés à la partie inférieure du bâti mobile 78 dont le rôle est de commander l'ouverture des mâchoires 42 lorsque celles-ci sont déplacées avec une capsule en regard du dispositif d'extraction pour libérer leur capsule. Pour cela, les organes de poussée 790, 791 ont la structure de tiges dont chacune est destinée à appliquer un appui sur l'une des mâchoires lors de la descente du sous-ensemble supérieur d'extraction 70 pour la fermeture sur la capsule. Il est à noter que la plaque d'obturation 40 est munie de trous 401, 402 visibles sur la Fig. 2 qui permettent le passage au travers de celle-ci des organes de poussée 790, 791. Les organes de poussée 790, 791 agissent sur les mâchoires pour coordonner leur ouverture avec la fermeture du dispositif d'extraction obtenue par la descente du bloc d'extraction mobile 70. A l'extrémité d'appui de chaque organe de poussée 790, 791 est disposé avantageusement une roulette orientée dans la direction du mouvement d'ouverture-fermeture des mâchoires de façon à ne pas entraver le mouvement des mâchoires.

L'invention va maintenant être décrite dans son fonctionnement afin de mieux comprendre le rôle de chaque élément et la manière dont ces éléments interagissent.

### 1. Choix d'une boisson et sélection d'une capsule correspondante :

Le consommateur fait le choix d'une boisson en appuyant sur l'un des boutons situés sur le tableau de commande 13 de l'armoire principale du dispositif (Fig. 1). Le signal correspondant au choix est envoyé à un système de contrôle central (non illustré) du dispositif qui traite ce signal et commande le déplacement du système d'emmagasinage 2. Le repérage du tube correspondant à la sélection peut être traité de différentes manières. Dans un mode préféré, le repérage se fait par un code électronique porté sur chaque tube lequel est lisible par un dispositif de lecture du dispositif. Le code peut être un code barre, un code radiofréquence ("RFID"), ou tout autre moyen de codage équivalent pouvant contenir des informations d'identification sur la nature des capsules contenues dans le tube. Un autre moyen de repérage peut consister en un système de repérage de couleurs au moyen d'un ou plusieurs capteurs de couleurs localisés dans la zone de passage. Les tubes peuvent être transparents et contenir des capsules de couleur lesquels sont repérés par les capteurs au moment du passage du tube. Un autre moyen de repérage plus simple peut consister en une initialisation des tubes puis un comptage d'avance au moyen d'un compteur. Le moyen de repérage peut aussi comprendre des micro-rupteurs ou électro-aimants permettant de contrôler l'arrêt du moteur.

Le carrousel est déplacé par action du moteur 272 commandé par le contrôleur jusqu'au moment où le tube repéré et sélectionné arrive dans au point d'intersection de I-I'. Le contrôleur arrête le moteur et le tube sélectionné est en position de présélection. Si le choix correspond à une capsule correspondant à un tube déjà en position de présélection, le contrôleur le reconnaît et le moteur 272 n'est pas activé.

### 2. Capture d'une capsule et transfert vers le système d'extraction:

Dans l'étape suivante, le système de capture 4 est déplacé par commande du contrôleur à partir d'une position d'éjection qui sera détaillée plus loin à une position de capture de la capsule située dans le tube présélectionné. Pour cela, le contrôleur commande la mise en marche du moteur 43 qui entraîne alors la plaque d'obturation 40 et les mâchoires 42 ensemble jusqu'en position de capture. La position de capture correspond à la position dans laquelle l'ouverture discrète 41 de la plaque d'obturation 40 coïncide verticalement avec l'ouverture inférieure du tube présélectionné. Une fois dans cette position, le contrôleur stoppe le moteur 43. La capsule 90 la plus basse dans le tube tombe par gravité au travers de l'ouverture et est retenue en appui sur les bords d'appui 48 de la paire de mâchoires 42 située en dessous. La mâchoire est dans ce cas en position refermée. Pour cela, le cylindre 50 est en position basse comme sur la Fig. 8, la partie dégagée 580 de la surface de came étant orientée du côté du doigt fixe 57 dans le carter. Il est à noter que l'espace entre les mâchoires et la plaque d'obturation 40 est juste suffisant pour l'épaisseur d'une capsule. Ainsi, les autres capsules situées dans le tube sont maintenues en empilement sur la capsule capturée. La plaque d'obturation 40 sert d'élément de séparation après rotation entre la capsule capturée et le reste de l'empilement contenu dans le tube. On peut envisager d'ajouter un élément de séparation additionnel pour permettre la descente de la capsule sélectionnée au travers de la plaque d'obturation sans qu'elle ait à subir tout le poids de la pile. Cela facilite la descente en réduisant le risque de blocage.

L'étape suivant consiste à transférer la capsule capturée dans la mâchoire jusqu'au système d'extraction. Pour cela, le système de capture 4 est réactivé en rotation par le moteur 43 sous la commande du contrôleur.

### 3. Libération d'une capsule dans le dispositif d'extraction :

Les Figs. 10 à 12 illustrent l'étape de libération d'une capsule dans le système d'extraction. La capsule est amenée par les mâchoires 42 en regard du bloc inférieur fixe d'extraction 71. Le moteur 43 est alors stoppé. L'arrêt du moteur peut être commandé par micro-rupteurs ou tout moyen équivalent bien connu de l'homme de l'art. Le contrôleur commande ensuite la descente du bloc supérieur d'extraction mobile 70 par mise en marche du moteur 76. La rotation de l'axe du moteur actionne les engrenages 77 qui déplacent alors le bloc 70 le long des tiges 46, 86 dont une portion au moins de leur longueur est filetée pour coopérer avec des pas de vis des alésages des engrenages latéraux. La descente du bloc mobile 70 conduit les tiges de poussées 790. 791 à passer au travers des trous 401, 402 de la plaque d'obturation jusqu'à provoquer l'ouverture des mâchoires 42.

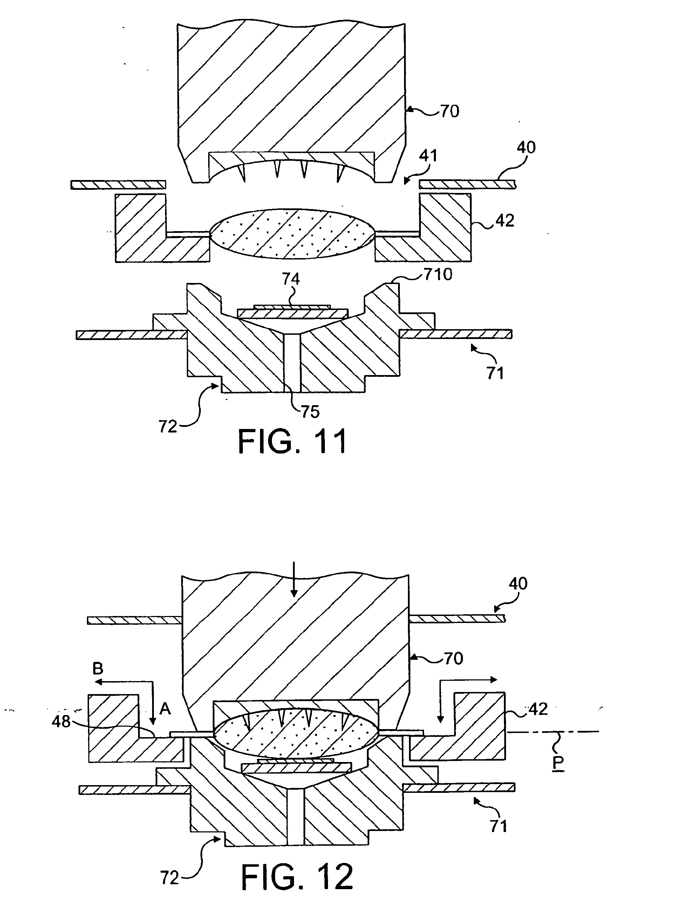

Lorsque les mâchoires sont ainsi sollicitées en appui par les organes d'appui 790, 791, elles s'abaissent par rapport à la plaque de support 40 et rentrent en contact du pointeau 52 des moyens de commandes 5. Les mâchoires sont repoussées vers le bas en comprimant le ressort 59 situé dans le carter. Le contact des mâchoires contre le pointeau a pour effet de provoquer leur ouverture et donc la libération de la capsule dans le dispositif d'extraction comme le montrent schématiquement les Figs. 11 et 12. La libération se fait alors que les mâchoires 42 se rapprochent verticalement des surfaces d'appui 710 du bloc d'extraction inférieur fixe 71. Les mâchoires 42 sont donc animées d'un mouvement à la fois descendant À et d'ouverture B permettant leur dégagement par rapport au bloc d'extraction comme le montre la Fig. 12. La fermeture du système d'extraction par le bloc 70 se fait donc de manière concomitante avec le mouvement des mâchoires.

Il est à noter que le bloc mobile 70 est dimensionné de façon à pouvoir passer au travers de l'ouverture 41 de la plaque d'obstruction sans gêne.

Il est aussi à noter que les mâchoires 42 sont repoussées dans la direction A jusqu'à ce que leur surface d'appui 48 se situe en dessous du plan d'appui P de la capsule correspondant à la surface de réception 710 du bloc inférieur. Les mâchoires sont alors en position d'attente jusqu'à la fin de l'extraction.

La capsule est alors prise en fermeture entre le bloc mobile supérieur 70 et le bloc fixe inférieur 71. La capsule a, de préférence, des bords latéraux qui sont pincés à l'interface entre les deux blocs d'extraction. La capsule est donc prise en charge entièrement dans le système d'extraction sans interaction mécanique significative entre la capsule et les moyens de capture à ce stade. Le système d'extraction peut être rendu parfaitement étanche par des moyens d'étanchéité du type joints toriques ou autres (non représentés).

Le procédé d'extraction est alors commandé par le contrôleur.

### 4. Extraction de la capsule :

L'extraction d'une capsule est un procédé connu en lui-même. Il n'est pas besoin de décrire en détail le principe. On trouvera une description détaillée du principe d'extraction dans les brevets US 5,826,492; US 5,649,472 et US5,762,987, à titre d'exemples préférentiels. Le contenu de ces brevets est introduit en rapport avec le mode d'extraction dans la présente demande par référence.

### 5. Re-capture de la capsule dans le système d'extraction, transfert et éjection :

Une fois la procédure d'extraction terminée, la capsule usagée est récupérée par les mâchoires 42 par effet d'ouverture du bloc d'extraction mobile 70. Le contrôleur commande la marche du moteur dans le sens inverse de rotation des engrenages 77, ce qui a pour effet de relever le bloc mobile 70. A l'inverse de la fermeture, le déplacement du bloc 70 entraîne les tiges de poussée 790, 791 vers le haut, ce qui supprime l'appui exercé sur les mâchoires. Les mâchoires reviennent en place sous la plaque d'obturation par effet de détente élastique du ressort de compression 59 sur les mâchoires. La montée des mâchoires dans le sens opposé à A, conjuguée à leur rapprochement dans le sens opposé à B, comme à la Fig. 12, provoque la reprise des bords de la capsule, sa capture et son soulèvement du bloc inférieur d'extraction 71.

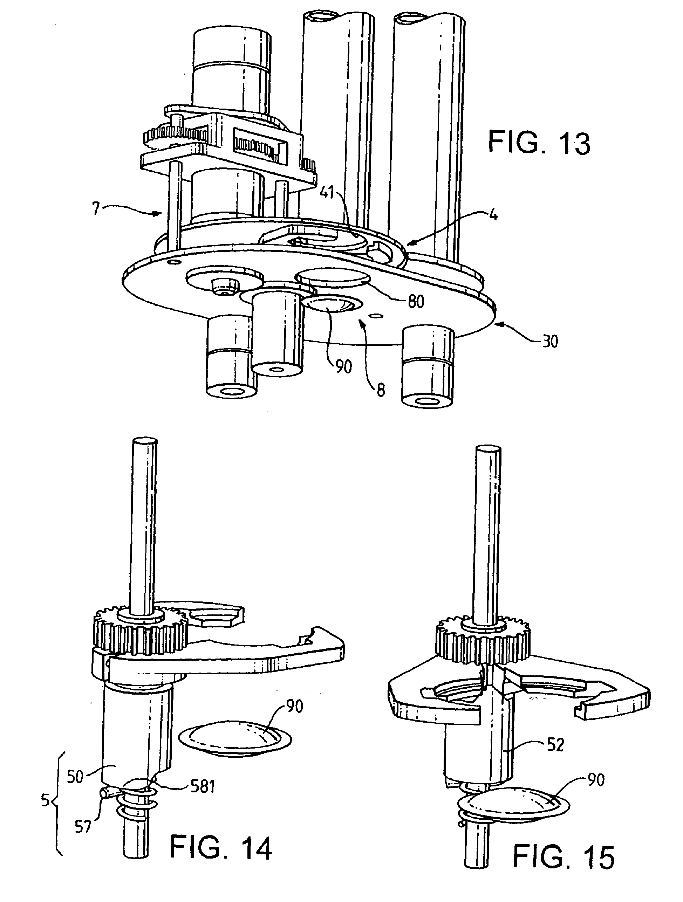

L'étape suivante consiste à transférer la capsule usagée vers une zone d'éjection. L'éjection de la capsule est illustrée aux Figs 13 à 15. Pour cela, le contrôleur commande la mise en marche du moteur 43 qui conduit en rotation le système de capture 4 à partir de la zone d'extraction 7 vers la zone d'éjection 8 du système. Lorsque l'ouverture 41 de la plaque d'obstruction est à l'aplomb de cette zone, matérialisée dans l'exemple illustré par une ouverture 80 pratiquée dans le bâti principal 30, le moteur 43 s'arrête. Dans l'opération de transfert vers cette zone, la rotation autour de l'axe O' conduit le cylindre 50 à s'élever sous l'effet de l'appui créer entre le doigt fixe 57 et la portion de surface de came en relief 581 comme le montre la Fig. 14. En s'élevant, le pointeau 52 du cylindre provoque l'écartement des mâchoires ce qui fait tomber la capsule 20. Un bac de récupération peut avantageusement être disposé dans le dispositif en dessous de la zone d'éjection. La capsule est ainsi éliminée après extraction sans qu'il soit nécessaire de la retirer du système d'extraction ni manuellement ni par un système d'éjection intégré au système d'extraction. Dans cette configuration, le système de capture est prêt à l'emploi pour un nouveau cycle de sélection.

L'invention qui vient d'être décrite en rapport avec un mode de réalisation préférentiel peut englober de nombreuses variantes et modifications, pouvant être à la portée de l'homme de l'art, sans pour autant sortir de l'étendue des revendications qui suivent.

## Revendications

1. Dispositif de préparation de boissons à partir de capsules contenant une substance à extraire dans un système d'extraction (7) pour la préparation de boissons comprenant:
un système d'emmagasinage (2) comprenant des capsules ordonnées selon plusieurs séries (20-23);
un moyen (4) mobile entre le systéme d'emmagasinage (2) et le système d'extraction (7)
**caractérisé en ce que** ledit moyen (4) est
un moyen de capture (4) mobile en rotation pour capturer individuellement une capsule dans une série et pour libérer la capsule dans un système d'extraction (7); et **en ce que**
le moyen de capture (4) est agencé de manière à prendre au moins deux positions dont une première position de réception dans laquelle la capsule est retenue individuellement et transférable par le moyen de capture (4) et une seconde position de libération dans laquelle le moyen de capture (4) est actionnable en ouverture pour libérer la capsule du moyen de capture dans le système d'extraction (7) lequel est agencé pour se refermer sur la capsule.

2. Dispositif selon la revendication 1, **caractérisé en ce que** la capsule est libérée par le moyen de capture (4) par dépose de la capsule sur une partie de réception (71) du système d'extraction résultant d'un mouvement de rapprochement vertical et de dégagement latéral du moyen de capture.

3. Dispositif selon la revendication 2, **caractérisé en ce que** le moyen de capture (4) libère la capsule dans le système d'extraction (7) de manière coordonnée en réponse à la fermeture du système d'extraction autour de la capsule.

4. Dispositif selon l'une quelconque des revendications précédentes, **caractérisé en ce que** des moyens d'actionnement en ouverture (5) du moyen de capture (4) sont prévus qui sollicitent le moyen de capture (4) une première fois en ouverture pour libérer la capsule dans le système d'extraction (7), puis, une deuxième fois en ouverture pour libérer la capsule dans une zone d'éjection (8) après que le moyen de capture ait récupéré la capsule usagée dans le système d'extraction (7).

5. Dispositif selon l'une quelconque des revendications précédentes, **caractérisé en ce que** le moyen de capture (4) comprend une paire de mâchoires (42), mobiles entre une position refermée suffisante pour retenir la capsule et une position écartée libérant la capsule, la paire de mâchoire (42) étant actionnable élastiquement en ouverture par écartement au moyen d'un pointeau (52) lequel active lesdites mâchoires (42) par déplacement relatif dudit pointeau par rapport à une zone d'écartement (424) desdites mâchoires.

6. Dispositif selon la revendication 5, **caractérisé en ce que** la paire de mâchoire (42) est mobile relativement au pointeau pour libérer la capsule par poussée réalisée au moins par un organe de poussée (790, 791) se déplaçant de concert avec une partie mobile (70) du système d'extraction lors de la fermeture du moyen d'extraction (7) autour de la capsule.

7. Dispositif selon la revendication 5, **caractérisé en ce que** les mâchoires (42) sont actionnables en ouverture dans une zone d'éjection (8) après réalisation de l'extraction de la capsule, correspondant à un déplacement du moyen de capture (4), intermédiaire entre l'extraction de la capsule dans la zone d'extraction et la capture de la capsule dans la zone de chargement.

8. Dispositif selon la revendication 5, **caractérisé en ce que** l'ouverture des mâchoires (42) en écartement dans la zone d'éjection pour libérer la capsule usagée est réalisée par un moyen à came (55) qui déplace le pointeau.

9. Dispositif selon l'une quelconque des revendications précédentes **caractérisé en ce que** le système d'emmagasinage (2) est mobile selon un premier chemin (I) et le moyen de capture (4) est mobile selon un second chemin (I') lequel vient en intersection du premier chemin (I) de façon à permettre la capture d'une capsule de la série localisée au point d'intersection des deux chemins (I,I').

10. Méthode de sélection et chargement d'une capsule pour la préparation d'une boisson dans un système d'extraction (7) à partir d'une zone d'emmagasinage (2) comprenant plusieurs séries de capsules (20-23) qui comprend la sélection et la capture d'une capsule parmi l'une des séries de capsules, le transfert de cette capsule dans un système d'extraction (7), l'extraction de cette capsule dans le système d'extraction (7) **caractérisée en ce que** la capsule est capturée par un moyen de capture (4) mobile en rotation lequel est agencé de manière à prendre au moins deux positions dont une première position de réception dans laquelle la capsule est retenue individuellement et transférable par le moyen de capture (4) et une seconde position de libération dans laquelle le moyen de capture (4) est actionnable en ouverture pour libérer la capsule dans le système d'extraction (7) lequel est apte à se refermer autour de la capsule.

11. Méthode selon la revendication 10, **caractérisée en ce que** la capsule est libérée dans le système d'extraction (7) par un moyen de capture (4) dans un mouvement de dégagement n'engendrant pas d'interaction mécanique entre le système d'extraction et le moyen de capture.

12. Méthode selon la revendication 11, **caractérisée en ce que** la capsule est libérée par le moyen de capture (4) par dépose de la capsule sur une partie de réception (71) du système d'extraction résultant d'un mouvement de rapprochement vertical et de dégagement latéral du moyen de capture.

13. Méthode selon l'une quelconque des revendications 11 à 12, **caractérisée en ce que**, la capsule usagée est récupérée puis transférée dans une zone d'éjection (8) pour être libérée à nouveau.

14. Méthode selon l'une quelconque des revendications 11 à 13, **caractérisée en ce que** la capsule est déplacée dans les zones ou systèmes (2, 7, 8) selon un chemin circulaire (I').

15. Méthode selon la revendication 14, **caractérisée en ce que** la zone d'emmagasinage comprend un carrousel formé d'une pluralité de tubes de recharges déplacée selon un chemin circulaire (I) coupant le chemin circulaire (I').

16. Méthode selon l'une quelconque des revendications 11 à 15, **caractérisée en ce que** la libération de la capsule dans le système d'extraction (7) est coordonnée à la fermeture du système et, réciproquement, la récupération de la capsule usagée dans le système d'extraction (7) est coordonnée à la réouverture du système d'extraction.

## Claims

1. Device for preparing beverages from capsules containing a substance to be extracted in an extraction system (7) for the preparation of beverages comprising:
a storage system (2) comprising capsules arranged in a plurality of series (20-23);
a means (4) movable between the storage system (2) and the extraction system (7)
**characterised in that** the said means (4) is
a rotationally movable capture means (4) for capturing a capsule individually from one series and for releasing the capsule in an extraction system (7); **and in that**
the capture means (4) is designed so as to adopt at least two positions, a first or reception position in which the capsule is held individually and transferable by the capture means (4) and a second or release position in which the capture means (4) is openable to release the capsule from the capture means in the extraction system (7), which is designed to close over the capsule.

2. Device according to Claim 1, **characterised in that** the capsule is released by the capture means (4) by deposition of the capsule on a reception part (71) of the extraction system resulting from a movement of vertical approach and lateral disengagement of the capture means.

3. Device according to Claim 2, **characterised in that** the capture means (4) releases the capsule in the extraction system (7) in a coordinated manner in response to the closure of the extraction system around the capsule.

4. Device according to any one of the preceding claims, **characterised in that** means (5) for opening the capture means (4) are provided which act on the capture means (4) on a first occasion to open it so as to release the capsule in the extraction system (7) and then on a second occasion to open it so as to release the capsule in an ejection area (8) after the capture means has recovered the used capsule from the extraction system (7).

5. Device according to any one of the preceding claims, **characterised in that** the capture means (4) comprises a pair of jaws (42) movable between a closed position sufficient to hold the capsule and a spread-apart position releasing the capsule, the pair of jaws (42) being openable elastically by spreading them apart by means of a nose (52) which activates the said jaws (42) by relative movement of the said nose with respect to a spreading-apart area (424) of the said jaws.

6. Device according to Claim 5, **characterised in that** the pair of jaws (42) is movable relative to the nose to release the capsule by the thrust produced at least by one thrust member (790, 791) moving in unison with a movable part (70) of the extraction system upon the closure of the extraction means (7) around the capsule.

7. Device according to Claim 5, **characterised in that** the jaws (42) are openable in an ejection area (8) after the extraction of the capsule has been carried out, corresponding to a movement of the capture means (4) intermediate between the extraction of the capsule in the extraction area and the capture of the capsule in the loading area.

8. Device according to Claim 5, **characterised in that** the opening of the jaws (42) by spreading them apart in the ejection area to release the used capsule is effected by a cam means (55) which moves the nose.

9. Device according to any one of the preceding claims, **characterised in that** the storage system (2) is movable along a first path (I) and the capture means (4) is movable along a second path (I') which intersects the first path (I) so as to allow the capture of a capsule from the series located at the point of intersection of the two paths (I, I').

10. Method for selecting and loading a capsule for the preparation of a beverage in an extraction system (7) from a storage area (2) comprising a plurality of series of capsules (20-23), which comprises selecting and capturing a capsule from one of the series of capsules, transferring this capsule to an extraction system (7) and extracting this capsule in the extraction system (7), **characterised in that** the capsule is captured by a rotationally movable capture means (4) which is designed so as to adopt at least two positions, a first or reception position in which the capsule is held individually and transferable by the capture means (4) and a second or release position in which the capture means (4) is openable to release the capsule in the extraction system (7), which is capable of closing around the capsule.

11. Method according to Claim 10, **characterised in that** the capsule is released in the extraction system (7) by a capture means (4) in a disengaging movement which causes no mechanical interaction between the extraction system and the capture means.

12. Method according to Claim 11, **characterised in that** the capsule is released by the capture means (4) by deposition of the capsule on a reception part (71) of the extraction system resulting from a movement of vertical approach and lateral disengagement of the capture means.

13. Method according to any one of Claims 11 to 12, **characterised in that** the used capsule is recovered, then transferred to an ejection area (8) to be released again.

14. Method according to any one of Claims 11 to 13, **characterised in that** the capsule is moved in the areas or systems (2, 7, 8) along a circular path (I').

15. Method according to Claim 14, **characterised in that** the storage area comprises a carousel formed from of a plurality of reloading tubes moved along a circular path (I) cutting the circular path (I').

16. Method according to any one of Claims 11 to 15, **characterised in that** the release of the capsule in the extraction system (7) is coordinated with the closure of the system and, vice versa, the recovery of the used capsule from the extraction system (7) is coordinated with the re-opening of the extraction system.

## Patentansprüche

1. Vorrichtung zur Getränkezubereitung aus eine zu extrahierende Substanz enthaltenden Kapseln in einem Extraktionssystem (7) für die Getränkezubereitung, umfassend:
ein Speichersystem (2), das in mehreren Reihen (20-23) angeordnete Kapseln umfasst,
ein Mittel (4), das zwischen dem Speichersystem (2) und dem Extraktionssystem (7) beweglich ist,
**dadurch gekennzeichnet, dass** das Mittel (4) ein drehbeweglicher Greifer (4) zum einzelnen Ergreifen einer Kapsel in einer Reihe und zum Freigeben der Kapsel in einem Extraktionssystem (7) ist
und dass der Greifer (4) so ausgebildet ist, dass er mindestens zwei Stellungen einnehmen kann, und zwar eine erste Aufnahmestellung, in der die Kapsel einzeln festgehalten wird und durch den Greifer (4) übertragbar ist, und eine zweite Freigabestellung, in der der Greifer (4) in Richtung Öffnung betätigbar ist, um die Kapsel aus dem Greifer in dem Extraktionssystem (7) freizugeben, das ausgebildet ist, um sich auf der Kapsel zu schließen.

2. Vorrichtung nach Anspruch 1, **dadurch gekennzeichnet, dass** die Kapsel von dem Greifer (4) freigegeben wird, indem die Kapsel durch eine vertikale Annäherungsbewegung und eine seitliche Ausrückung des Greifers auf einem Aufnahmeteil (71) des Extraktionssystems abgelegt wird.

3. Vorrichtung nach Anspruch 2, **dadurch gekennzeichnet, dass** der Greifer (4) die Kapsel in dem Extraktionssystem (7) koordiniert als Reaktion auf die Schließung des Extraktionssystems um die Kapsel herum freigibt.

4. Vorrichtung nach einem der vorhergehenden Ansprüche, **dadurch gekennzeichnet, dass** Mittel (5) zum Öffnen des Greifers (4) vorgesehen sind, die den Greifer (4) ein erstes Mal in Richtung Öffnung beaufschlagen, um die Kapsel in dem Extraktionssystem (7) freizugeben, und dann ein zweites Mal in Richtung Öffnung beaufschlagt, um die Kapsel in einer Ausstoßzone (8) freizugeben, nachdem der Greifer die verbrauchte Kapsel in dem Extraktionssystem (7) wieder aufgenommen hat.

5. Vorrichtung nach einem der vorhergehenden Ansprüche, **dadurch gekennzeichnet, dass** der Greifer (4) ein Paar von Backen (42) umfasst, die zwischen einer ausreichend geschlossenen Stellung, um die Kapsel festzuhalten, und einer offenen, die Kapsel freigebenden Stellung beweglich sind, wobei das Paar von Backen (42) in Richtung Öffnung durch Spreizen mit Hilfe einer Nadel (52) elastisch betätigbar ist, die die Backen (42) durch Relativbewegung dieser Nadel bezüglich einer Spreizzone (424) der Backen aktiviert.

6. Vorrichtung nach Anspruch 5, **dadurch gekennzeichnet, dass** das Backenpaar (42) bezüglich der Nadel beweglich ist, um die Kapsel durch einen Schub freizugeben, der mindestens durch ein Schuborgan (790, 791) ausgeführt wird, das sich gemeinsam mit einem beweglichen Teil (70) des Extraktionssystems bei der Schließung des Extraktionsmittels (7) um die Kapsel herum bewegt.

7. Vorrichtung nach Anspruch 5, **dadurch gekennzeichnet, dass** die Backen (42) in einer Ausstoßzone (8) nach Durchführung der Extraktion der Kapsel in Richtung Öffnung betätigbar sind, was einer Zwischenbewegung des Greifers (4) zwischen der Extraktion der Kapsel in der Extraktionszone und der Ergreifung der Kapsel in der Ladezone entspricht.

8. Vorrichtung nach Anspruch 5, **dadurch gekennzeichnet, dass** die Öffnung der Backen (42) durch Spreizen in der Ausstoßzone zur Freigabe der verbrauchten Kapsel durch eine die Nadel bewegende Steuerkurveneinrichtung (55) vorgenommen wird.

9. Vorrichtung nach einem der vorhergehenden Ansprüche, **dadurch gekennzeichnet, dass** das Speichersystem (2) auf einem ersten Weg (I) beweglich ist und der Greifer (4) auf einem zweiten Weg (I') beweglich ist, der den ersten Weg (I) so schneidet, dass das Ergreifen der Kapsel der am Schnittpunkt der beiden Wege (I, I') angeordneten Reihe gestattet wird.

10. Verfahren zum Wählen und Laden einer Kapsel zur Zubereitung eines Getränks in einem Extraktionssystem (7) aus einer mehrere Kapselreihen (20-23) umfassenden Speicherzone (2), das die Wahl und das Ergreifen einer Kapsel aus einer der Kapselreihen, die Übertragung dieser Kapsel in ein Extraktionssystem (7) und die Extraktion dieser Kapsel in dem Extraktionssystem (7) umfasst, **dadurch gekennzeichnet, dass** die Kapsel durch einen drehbeweglichen Greifer (4) ergriffen wird, der so ausgebildet ist, dass er mindestens zwei Stellungen einnehmen kann, und zwar eine erste Aufnahmestellung, in der die Kapsel einzeln festgehalten wird und durch den Greifer (4) übertragbar ist, und eine zweite Freigabestellung, in der der Greifer (4) in Richtung Öffnung zum Freigeben der Kapsel in dem Extraktionssystem (7) betätigbar ist, das sich um die Kapsel herum schließen kann.

11. Verfahren nach Anspruch 10, **dadurch gekennzeichnet, dass** die Kapsel in dem Extraktionssystem (7) durch einen Greifer (4) in einer Ausrückbewegung freigegeben wird, die keine mechanische Wechselwirkung zwischen dem Extraktionssystem und dem Greifer erzeugt.

12. Verfahren nach Anspruch 11, **dadurch gekennzeichnet, dass** die Kapsel durch den Greifer (4) freigegeben wird, indem die Kapsel durch eine vertikale Annäherungsbewegung und eine seitliche Ausrückbewegung des Greifers auf einem Aufnahmeteil (71) des Extraktionssystems freigegeben wird.

13. Verfahren nach einem der Ansprüche 11 bis 12, **dadurch gekennzeichnet, dass** die verbrauchte Kapsel wieder aufgenommen und dann in eine Ausstoßzone (8) übertragen wird, um wieder freigegeben zu werden.

14. Verfahren nach einem der Ansprüche 11 bis 13, **dadurch gekennzeichnet, dass** die Kapsel in den Zonen oder Systemen (2, 7, 8) auf einem kreisförmigen Weg (I') bewegt wird.

15. Verfahren nach Anspruch 14, **dadurch gekennzeichnet, dass** die Speicherzone ein von einer Vielzahl von Nachladerohren gebildetes Karussell umfasst, das auf einem kreisförmigen Weg (I) bewegt wird, der den kreisförmigen Weg (I') schneidet.

16. Verfahren nach einem der Ansprüche 11 bis 15, **dadurch gekennzeichnet, dass** die Freigabe der Kapsel in dem Extraktionssystem (7) mit der Schließung des Systems koordiniert ist und umgekehrt die Wiederaufnahme der verbrauchten Kapsel in dem Extraktionssystem (7) mit der Wiederöffnung des Extraktionssystems koordiniert ist.
